# EUROPÄISCHE PATENTANMELDUNG

(11) **EP 3 605 715 A1**
(43) Veröffentlichungstag der Anmeldung: **05.02.2020**
(21) Anmeldenummer: 18186357.2
(22) Anmeldetag: 30.07.2018
(51) Int. Cl.: H01M 10/42, H01M 2/34, H01M 10/052, H04W 84/12

(54) **AKKUMULATOR MIT INTEGRIERTEM DRAHTLOS ANSTEUERBAREM SCHALTER**

(71) Anmelder: dff solutions GmbH, 37079 Göttingen (DE)
(72) Erfinder: Dossmann, Felix, 37075 Göttingen (DE)
(74) Vertreter: REHBERG HÜPPE + PARTNER

(57) **Zusammenfassung**

Eine Vorrichtung (1) mit einem Gehäuse (2), zwei außen an dem Gehäuse (2) ausgebildeten elektrischen Kontakten (3, 4, 18, 19) und einem in dem Gehäuse (2) angeordneten und zwischen die elektrischen Kontakte (3, 4, 18, 19) geschalteten elektrochemischen Energiespeicher (6), wobei Form und Abmessungen des Gehäuses (2), Form und Anordnung der elektrischen Kontakte (3, 4, 18, 19) und eine Nennspannung des elektrochemischen Energiespeichers (6) einer Vorgabe für auswechselbare Batterien (17) oder Akkumulatoren entsprechen, umfasst weiterhin einen elektronischen Schalter (7), der in dem Gehäuse (2) mit dem elektrochemischen Energiespeicher (6) zwischen den elektrischen Kontakten (3, 4, 18, 19) in Reihe geschaltet ist, und einen in dem Gehäuse (2) angeordneten Controller (9) auf, der eine zur drahtlosen Kommunikation geeignete Schnittstelle (11) aufweist und der dazu ausgebildet ist, den Schalter (7) in Abhängigkeit von über die Schnittstelle (11) empfangenen Signalen zu öffnen und zu schließen.

## Beschreibung

### TECHNISCHES GEBIET DER ERFINDUNG

Die Erfindung bezieht sich auf eine Vorrichtung mit einem Gehäuse, zwei außen an dem Gehäuse ausgebildeten elektrischen Kontakten und einem in dem Gehäuse angeordneten und zwischen die elektrischen Kontakte geschalteten elektrochemischen Energiespeicher, wobei Form und Abmessungen des Gehäuses, Form und Anordnung der elektrischen Kontakte und einer Nennspannung des elektrochemischen Energiespeichers einer Vorgabe für auswechselbare Batterien oder Akkumulatoren entsprechen. Diese Vorgabe kann beispielsweise eine Norm sein, die Batterien erfüllen, welche gemeinhin als D-, C-, B-, A-, AA- oder AAA-Zellen bezeichnet werden. Die Vorgabe kann aber auch Akkumulatoren für E-Bikes, Notebooks oder Smartphones definieren.

### STAND DER TECHNIK

Die bereits angesprochenen, als D-, C-, B-, A-, AA- und AAA-Zellen bezeichneten Batterien sind Vorrichtungen, wie sie eingangs definiert wurden und wie sie dem Oberbegriff des unabhängigen Patentanspruchs 1 entsprechen. Derartige Batterien können wiederaufladbar sein und werden dann zur Abgrenzung gegenüber nicht wiederaufladbaren Batterien, d. h. sogenannten primären Zellen, auch als sekundäre Zellen oder als Akkumulatoren bezeichnet.

Typischerweise weisen Batterien keine weiteren Bestandteile in ihrem Gehäuse als den zwischen ihre elektrischen Kontakte geschalteten elektrochemischen Energiespeicher auf, auch um den Innenraum des Gehäuses maximal für die Speicherung von elektrischer Energie in chemischer Form auszunutzen.

Es sind jedoch Batterien bekannt, bei denen an dem Gehäuse durch Drücken eines oder zweier Druckschalter eine Einrichtung aktiviert wird, die den Ladezustand des elektrochemischen Energiespeichers der Batterie anzeigt.

Für Kraftfahrzeuge sind Batterieschalter bekannt, die außerhalb der eigentlichen Autobatterie angeordnet und über einen der elektrischen Kontakte der Autobatterie mit deren elektrochemischen Energiespeicher in Reihe geschaltet werden. Mithilfe eines solchen Schalters kann eine ungewollte Entladung einer Autobatterie über längere Standzeiten des jeweiligen Kraftfahrzeugs hinweg verhindert werden, die sonst infolge von Kriechströmen oder Versorgungsströmen von nicht abschaltbaren Einrichtungen des Kraftfahrzeugs verursacht werden.

Es sind auch per Fernsteuerung betätigbare Batterieschalter für Kraftfahrzeuge bekannt, mit denen die Autobatterie abgeschaltet werden kann, um eine unbefugte Verwendung eines entwendeten Kraftfahrzeugs zu unterbinden.

Bei verschiedenen batteriebetriebenen elektrischen Geräten besteht die Gefahr einer Entladung der eingesetzten Batterien infolge von Kriechströmen oder Versorgungsströmen von nicht abschaltbaren Funktionen. Oftmals sind bei solchen Vorrichtungen keine Batterieschalter vorhanden, die ein Trennen der Batterie ermöglichen, um derartige Entladeströme zu unterbrechen.

Wenn bei einem elektrochemischen Energiespeicher einer herkömmlichen nicht wiederaufladbaren Batterie oder eines herkömmlichen Akkumulators das Fließen von Entladeströmen vollständig unterbunden wird, halten diese elektrochemischen Energiespeicher die in ihnen gespeicherte elektrische Energie zumindest zu wesentlichen Anteilen über längere Zeiträume von vielen Monaten bis zu einigen Jahren.

Aus der DE 10 2009 011 574 A1 ist ein elektrisch steuerbares Schaltelement mit einem elektronischen Halbleiterschalter bekannt, das z. B. über ein Notebook gesteuert wird, um die Stromversorgung von im Stand-by-Betrieb befindlichen elektrischen Verbrauchern zwecks Energieeinsparung zu unterbrechen. Das Schaltelement wird über die Stromversorgung des Notebooks versorgt, und beim Ein- und Ausschalten des Notebooks werden alle Verbraucher im Stromkreis automatisch ein- und ausgeschaltet.

Die Akkumulatoren von E-Bikes stellen Gegenstände von hohem Wert dar. Dieser Wert kann mehr als die Hälfte des Gesamtwerts eines E-Bikes ausmachen. Bei Akkumulatoren von E-Bikes ist das Diebstahlrisiko daher noch höher als das bei den ganzen E-Bikes. Darüber hinaus treten auch bei E-Bikes die geschilderten Probleme durch parasitäre Entladeströme auf.

### AUFGABE DER ERFINDUNG

Der Erfindung liegt die Aufgabe zugrunde, eine Vorrichtung mit den Merkmalen des Oberbegriffs des unabhängigen Patentanspruchs 1 aufzuzeigen, die die geschilderten Probleme aufgrund von in vielen batteriebetriebenen Geräten bislang nicht zu unterbindenden Entladeströmen beseitigt.

### LÖSUNG

Die Aufgabe der Erfindung wird durch eine Vorrichtung mit den Merkmalen des unabhängigen Patentanspruchs 1 gelöst. Die abhängigen Patentansprüche betreffen bevorzugte Ausführungsformen der erfindungsgemäßen Vorrichtung.

### BESCHREIBUNG DER ERFINDUNG

Eine erfindungsgemäße Vorrichtung mit einem Gehäuse, zwei außen an dem Gehäuse ausgebildeten elektrischen Kontakten und einem in dem Gehäuse angeordneten und zwischen die elektrischen Kontakte geschalteten elektrochemischen Energiespeicher, wobei Form und Abmessungen des Gehäuses, Form und Anordnung der elektrischen Kontakte und einer Arbeitsspannung des elektrochemischen Energiespeichers einer Vorgabe für auswechselbare Batterien oder Akkumulatoren entsprechend, weist zusätzlich einen elektronischen Schalter, der in dem Gehäuse mit dem elektrochemischen Energiespeicher zwischen den elektrischen Kontakten in Reihe geschaltet ist, sowie einen Controller auf, der ebenfalls in dem Gehäuse angeordnet ist, eine zur drahtlosen Kommunikation geeignete Schnittstelle aufweist und dazu ausgebildet ist, in Abhängigkeit von über die Schnittstelle empfangenen Signalen den Schalter zu öffnen und zu schließen.

Damit ist es durch Senden eines entsprechenden Signals an die Schnittstelle möglich, den Controller dazu zu veranlassen, den elektronischen Schalter zu öffnen. Auch diese Weise kann der elektrochemische Energiespeicher abgetrennt werden, um sein Entladen zu verhindern, wenn die erfindungsgemäße Vorrichtung beispielsweise als Batterie in einem elektrischen Gerät verwendet wird, in dem ansonsten nicht abschaltbare Entladeströme aus der Batterie fließen. Wenn das jeweilige elektrische Gerät zum Batteriebetrieb aktiviert werden soll, ist entsprechend ein Signal über die Schnittstelle an den Controller zu senden, das ihn dazu veranlasst, den elektronischen Schalter wieder zu schließen.

Weiterhin eröffnet die erfindungsgemäße Vorrichtung die Möglichkeit, die Funktion batteriebetriebener Geräte per Fernsteuerung zu deaktivieren und/oder zu aktivieren, indem ihre Stromversorgung aus der erfindungsgemäßen Vorrichtung und ggf. damit in Reihe geschalteten Batterien unterbrochen bzw. hergestellt wird. So kann beispielsweise die Verwendung elektrischer Spielzeuge - sowohl was deren Dauer als auch deren Uhrzeit anbelangt - auf bestimmte Zeiträume beschränkt werden. Dies kann auch automatisch mit Hilfe eines Programms auf einem Computer, wie beispielsweise einer sogenannten App auf einem Smartphone geschehen. Zur Deaktivierung des entsprechenden elektrischen Geräts ist es nicht notwendig, die Batterien aus dem Gerät zu entnehmen, und zur erneuten Aktivierung die Batterien wieder einzubauen. Der Controller der erfindungsgemäßen Vorrichtung muss hierfür über keine weiteren Fähigkeiten verfügen als abhängig von dem über seine Schnittstelle empfangenen Signal den elektrochemischen Halbleiterschalter zu öffnen oder zu schließen.

Typischerweise werden in einem elektrischen Gerät mehrere Batterien in Reihe geschaltet, um eine Versorgungsspannung für das elektrische Gerät aufzubringen. Bei einer solchen Reihenschaltung reicht es aus, wenn eine der Batterien durch eine erfindungsgemäße Vorrichtung ersetzt wird, weil der in der Vorrichtung geöffnete elektronische Halbleiterschalter auch verhindert, dass ein Entladestrom aus den elektrochemischen Energiespeichern der anderen Batterien fließt. Es versteht sich, dass der elektrochemische Energiespeicher der erfindungsgemäßen Vorrichtung bei solchen Verwendungen der erfindungsgemäßen Vorrichtung möglichst genau auf die elektrochemischen Energiespeicher der anderen Batterien abzustimmen ist, da bei einer Reihenschaltung mehrerer elektrochemischer Energiespeicher der dieser Reihenschaltung entnommene elektrische Strom durch alle elektrochemischen Energiespeicher fließen muss. Entsprechend sollten alle in Reihe geschalteten elektrochemischen Energiespeicher möglichst gleich sein. Weiterhin versteht es sich, dass der elektronische Halbleiterschalter der erfindungsgemäßen Vorrichtung nicht nur dazu geeignet sein muss, die von dem eigenen elektrochemischen Energiespeicher der Vorrichtung bereitgestellte Spannung zu sperren, sondern auch ein Vielfaches dieser Spannung, vorzugsweise mindestens das Dreifache der Nennspannung des elektrochemischen Energiespeichers der erfindungsgemäßen Vorrichtung, vorzugsweise mindestens das Vierfache dieser Spannung noch mehr bevorzugt mindestens das Sechsfache dieser Spannung und am meisten bevorzugt mindestens das Achtfache dieser Spannung.

Das Gehäuse der erfindungsgemäßen Vorrichtung kann wie dasjenige einer üblichen Batterie dauerhaft verschlossen sein. Darunter ist zu verstehen, dass es ohne Zerstörung zumindest des Gehäuses selbst nicht geöffnet werden kann. Alternativ kann das Gehäuse wiederholt öffen- und schließbar sein und einen Aufnahmeraum sowie innen in dem Aufnahmeraum angeordnete zweite elektrische Kontakte aufweisen, die eine einer anderen Vorgabe für auswechselbare Batterien entsprechende Batterie elektrisch kontaktieren, die als der elektrochemische Energiespeicher in dem Aufnahmeraum angeordnet ist und die selbst keinen Schalter aufweist. Anders gesagt besteht die erfindungsgemäße Vorrichtung dann aus dem Gehäuse mit fest darin angeordnetem elektronischen Schalter und Controller sowie auswechselbar darin angeordneter Batterie ohne Schalter und entsprechend auch ohne Controller als dem elektrochemischen Energiespeicher. Dieser elektrochemische Energiespeicher kann dann eine nicht wiederaufladbare Batterie sein, weil er leicht ausgetauscht werden kann und weil sein Verbrauch nicht bedeutet, dass die gesamte Vorrichtung einschließlich des elektronischen Schalters und des diesen ansteuerbaren Controllers verbraucht ist. Vielmehr können das Gehäuse mit dem elektronischen Schalter und dem diesen ansteuerbaren Controller nach Einsetzen einer neuen Batterie in das Gehäuse als frischer elektrochemischer Energiespeicher weiter verwendet werden.

Grundsätzlich ist es jedoch bevorzugt, wenn der elektrochemische Energiespeicher der erfindungsgemäßen Vorrichtung wieder aufladbar ist. So kann der elektrochemische Energiespeicher einen sogenannten Lithium-Ionen-Akkumulator umfassen, der vielfach wiederaufladbar ist, ohne dass ein sogenannter Memory-Effekt auftritt.

Wie bereits bei der Definition des technischen Gebiets der Erfindung angemerkt wurde, können die Form und die Abmessungen des Gehäuses, die Form und die Anordnung der elektrischen Kontakte und die Nennspannung des elektrochemischen Energiespeichers bei der erfindungsgemäßen Vorrichtung einer D-, C-, B-, A-, AA- oder AAA-Zelle entsprechen. Dabei kann die Nennspannung auch davon abhängen, ob der elektrochemische Energiespeicher wiederaufladbar ist oder nicht. Bei Ausbildung der genannten D- bis AAA-Zellen als primäre Zellen beträgt deren Nennspannung typischerweise 1,5 Volt, während sie bei Ausbildung als sekundäre Zellen typischerweise 1,2 Volt beträgt. Bei der erfindungsgemäßen Vorrichtung können die Form und die Abmessungen des Gehäuses, die Form und die Anordnung der elektrischen Kontakte und die Nennspannung des elektrochemischen Energiespeichers auch einem Akkumulator für E-Bikes, Notebooks oder Smartphones entsprechen. Mit dem von dem Controller angesteuerten elektronischen Schalter der Vorrichtung kann nicht nur ein parasitärer Entladestrom abgeschaltet, sondern auch eine unbefugte Verwendung des aus dem Energiespeicher versorgten jeweiligen Geräts zumindest erheblich behindert, wenn nicht gar ganz verhindert werden.

Vorzugsweise ist dem Controller der erfindungsgemäßen Vorrichtung eine individuelle Geräte-ID, insbesondere in Form einer sogenannten IP-Adresse, zugeordnet, über die Signale individuell an den Controller adressierbar sind. Mit einem derart individuell adressierten Signal wird entsprechend ausschließlich der elektrochemische Energiespeicher der erfindungsgemäßen Vorrichtung und ggf. jeder damit in Reihe geschaltete elektrochemische Energiespeicher abgeschaltet oder angeschaltet.

Die Schnittstelle der erfindungsgemäßen Vorrichtung ist vorzugsweise zur drahtlosen Kommunikation über ein WLAN oder WPAN, d. h. ein drahtloses lokales oder privates Netzwerk ausgebildet. Die Kommunikation mit dem Controller kann dann über seine Schnittstelle unter Anwendung des Protokolls des jeweiligen WLAN oder WPAN erfolgen.

Konkret kann der Controller mit der Schnittstelle als ZigBie-, Bluetooth- oder Smart-Bluetooth-Modul ausgebildet sein. Bevorzugt ist dabei ein Smart-Bluetooth-Modul, weil sich die Smart-Bluetooth-Technologie, die auch als Low-Energy-Bluetooth bezeichnet wird, durch einen besonders geringen Energieeigenverbrauch auszeichnet. Bereits ein kleiner eigener Energiespeicher des Controllers stellt dessen Funktion daher über lange Zeiträume sicher.

Bei der erfindungsgemäßen Vorrichtung ist es jedoch bevorzugt, wenn der Controller elektrisch aus dem elektrochemischen Energiespeicher versorgt wird. Bei geringem Energieeigenverbrauch des Controllers wir damit nur ein kleiner Strom aus dem elektrochemischen Energiespeicher gezogen, der ihn nur über sehr lange Zeiträume hinweg entladen kann. Zudem wird der Controller bei Versorgung aus dem elektrochemischen Energiespeicher erst dann mangels Energie funktionslos, wenn der elektrochemische Energiespeicher bereits erschöpft ist.

Bezüglich der konkreten Ausgestaltung des elektronischen Halbleiterschalters ist es bevorzugt, wenn es sich um einen selbstleitenden Halbleiterschalter handelt, der von dem Controller auf ein entsprechendes über seine Schnittstelle empfangenes Signal hin aktiv ausgeschaltet werden muss. Vor dem Empfang eines solchen Signals bleibt der Halbleiterschalter eingeschaltet, d. h. geschlossen und leitend. Auch wenn der Controller ausfällt, bleibt der Halbleiterschalter leitend oder er wird wieder leitend.

Alternativ oder zusätzlich kann an dem Gehäuse der erfindungsgemäßen Vorrichtung ein mechanischer Druckschalter angeordnet sein, dessen Betätigung den elektronischen Halbleiterschalter in eine Grundstellung und insbesondere in eine leitende, d. h. geschlossene Grundstellung zurücksetzt.

In einer anderen Ausführungsform der erfindungsgemäßen Vorrichtung ist der elektronische Halbleiterschalter ein selbstsperrender Halbleiterschalter. Wenn der Controller diesen Halbleiterschalter nur dann schließt oder geschlossen hält, wenn die über die Schnittstelle empfangenen Signale einen individuellen Freigabecode enthalten, wird eine unbefugte Verwendung des Energiespeichers bzw. des daraus versorgte elektrischen Geräts effizient verhindert. Beispielsweise kann der Controller so konfiguriert sein, dass er den elektronischen Schalter nur dann schließt, wenn sich ein bestimmtes Smartphone in seiner Nähe befindet und eine Bluetooth-Kommunikationsverbindung zu ihm unterhält. So kann eine nachrüstbare Wegfahrsperre für ein E-Bike realisiert werden, die sich automatisch aufhebt, wenn der Besitzer des Smartphones das E-Bike benutzt.

Wenn der elektronische Schalter der erfindungsgemäßen Vorrichtung mit einer antiparallel ausgerichteten Diode parallel geschaltet ist, kann ein wiederaufladbarer elektrochemischer Energiespeicher der Vorrichtung auch dann aufgeladen werden, wenn der elektronische Halbleiterschalter von dem Controller offen, d. h. nichtleitend gehalten wird, weil kein Strom aus dem elektrochemischen Energiespeicher herausfließen soll.

Grundsätzlich ist für den elektronischen Halbleiterschalter der erfindungsgemäßen Vorrichtung ein nur in der normalen Entladerichtung des elektrochemischen Energiespeichers der erfindungsgemäßen Vorrichtung sperrender Halbleiterschalter ausreichend. Es wird kein sogenannter bidirektional sperrender Halbleiterschalter benötigt. Andererseits versteht sich, dass bei der Auswahl des Halbleiterschalters für die erfindungsgemäße Vorrichtung auf einen solchen zu achten ist, der den Strom von dem elektrochemischen Energiespeicher im geöffneten Zustand vollständig sperrt, d. h. ohne dass ein Reststrom verbleibt. Der Fachmann auf dem Gebiet der elektronischen Halbleiterbauteile verfügt hier über ausreichende Kenntnisse, um diese Anforderungen mit einem oder mehreren miteinander verschalteten Halbleiterbauteilen zu erfüllen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Schalter die Rede ist, ist dies so zu verstehen, dass genau ein Schalter, zwei Schalter oder mehr Schalter vorhanden sind. Die in den Patentansprüchen angeführten Merkmale können durch andere Merkmale ergänzt werden oder die einzigen Merkmale sein, die das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematische Darstellung einer ersten Ausführungsform der erfindungsgemäßen Vorrichtung,
- **Fig. 2**: ist eine schematische Darstellung einer zweiten Ausführungsform der erfindungsgemäßen Vorrichtung und
- **Fig. 3**: erläutert die Aktivierung und Deaktivierung mehrerer erfindungsgemäßer Vorrichtungen über eine sogenannte App auf einem sogenannten Smartphone.

### FIGURENBESCHREIBUNG

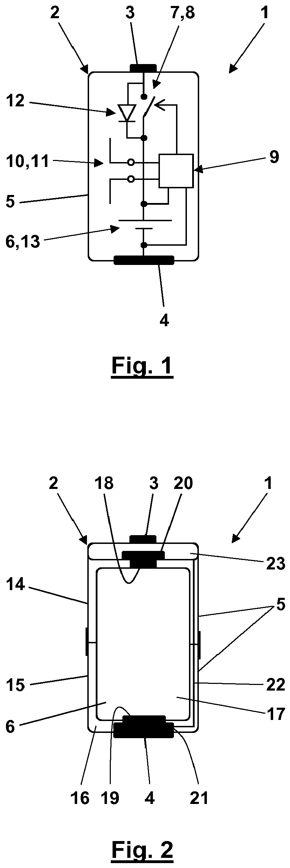

In **Fig. 1** ist eine erfindungsgemäße Vorrichtung 1 stark schematisch dargestellt. Insbesondere entsprechen die Größenverhältnisse der dargestellten Bestandteile der Vorrichtung 1 nicht deren tatsächlichen Größenverhältnissen. Die Vorrichtung 1 gemäß Fig. 1 weist ein geschlossenes Gehäuse 2 auf, an dem zwei elektrische Kontakte 3 und 4 ausgebildet sind. Ansonsten ist das Gehäuse 2 aus elektrisch isolierendem Material 5 ausgebildet. Zwischen den elektrischen Kontakten 3 und 4 ist ein elektrochemischer Energiespeicher 6 mit einem Schalter 7 in Reihe geschaltet. Der Schalter 7 ist als elektronischer Halbleiterschalter 8 ausgebildet und wird von einem Controller 9 angesteuert. Die Energieversorgung des Controllers 9 erfolgt aus dem elektrochemischen Energiespeicher 6. Die Ansteuerung des elektronischen Halbleiterschalters 8 durch den Controller 9 erfolgt abhängig von Signalen, die von dem Controller 9 über eine Antenne 10 als zur drahtlosen Kommunikation geeignete Schnittstelle 11 empfangen werden. Dabei führt der Controller 9 nur Befehle aus, die in Signalen enthalten sind, die individuell an den Controller 9 einer bestimmten Vorrichtung 1 adressiert sind, was anhand des Abgleichs einer individuellen Geräte-ID des Controllers 9 mit einer in dem Signalen codierten Geräte-ID sichergestellt wird. Der Schalter 7 ist mit einer antiparallel ausgerichteten Diode 12 in Reihe geschaltet, die ein Aufladen des als Lithium-Ionen-Akkumulator 13 ausgebildeten elektrochemischen Energiespeicher 6 auch bei geöffnetem Schalter 7 ermöglicht. Form und Abmessungen des Gehäuses 2, Form und Anordnung der elektrischen Kontakte 3 und 4 sowie eine Nennspannung des elektrochemischen Energiespeichers 6 entsprechen einer Vorgabe, bspw. einer Norm für auswechselbare Batterien. Konkret kann die Vorrichtung 1 zum Beispiel die Abmessungen und Funktionen einer C-Zelle aufweisen.

Bei der Ausführungsform der erfindungsgemäßen Vorrichtung 1 gemäß **Fig. 2** ist das Gehäuse 2 aus zwei Teilen 14 und 15 zusammengesetzt, die lösbar miteinander verbunden sind. Das Gehäuse 2 umschließt einen Innenraum 16 und nimmt in diesem eine Batterie 17 auf. Für elektrische Kontakte 18 und 19 der Batterie 17 sind angrenzend an den Innenraum 16 elektrische Gegenkontakte 20 und 21 vorgesehen. Dabei ist der elektrische Gegenkontakt 21 direkt mit dem elektrischen Kontakt 4 verbunden, während zwischen dem elektrischen Gegenkontakt 20 und dem elektrischen Kontakt 3 der hier nicht dargestellte Schalter 7 gemäß Fig. 1 angeordnet ist. Von dem elektrischen Kontakt 21 führt eine Versorgungsleitung 22 zu der über den elektrochemischen Energiespeicher 6 hinaus gehenden Schaltung 23 der erfindungsgemäßen Vorrichtung 1, die hier insgesamt nicht detailliert ist. Bei der Ausführungsform der erfindungsgemäßen Vorrichtung 1 gemäß Fig. 2 kann die Batterie 17 eine nicht wiederaufladbare Batterie, d. h. eine sogenannte primäre Zelle sein, die bei Verbrauch des durch sie bereitgestellten elektrochemischen Energiespeichers 6 ausgetauscht wird. Dazu wird das Gehäuse 2 geöffnet, die Batterie 17 entfernt und durch eine frische Batterie ersetzt. Um diese frische Batterie herum wird das Gehäuse 2 wieder geschlossen. Wenn die Vorrichtung 1 insgesamt einer D-Zelle entspricht, kann die Batterie 17 beispielsweise eine C-Zelle sein.

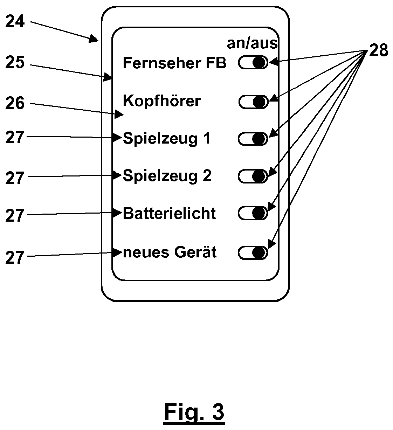

**Fig. 3** zeigt ein sogenanntes Smartphone 24, das auf seinem Bildschirm 25 eine Benutzermaske 26 einer sogenannten App anzeigt. Die Benutzermaske 26 zeigt Geräteidentifikationen 27 übersetzt in Gerätebeschreibungen an. Neben den Geräteidentifikationen 27 zeigt die Benutzermaske 26 Bedienfelder 28 an, über deren Betätigung ein Benutzer veranlassen kann, dass das Smartphone 24 beispielsweise mit seiner als Bluetooth-Modul ausgebildeten Schnittstelle zur drahtlosen Kommunikation den Befehl an den ebenfalls als Bluetooth-Modul ausgebildeten Controller 9 der erfindungsgemäßen Vorrichtung 1 ausgibt, den Schalter 7 der Vorrichtung 1 zu schließen. Dadurch wird dann der elektrochemische Energiespeicher 6 der Vorrichtung 1 freigegeben und ein elektrisches Gerät aktiviert, das aus der Vorrichtung 1 elektrisch versorgt. In gleicher Weise kann durch gegenläufige Betätigung des Betätigungsfelds 28 diese Aktivierung wieder beendet werden.

### BEZUGSZEICHENLISTE

- 1: Vorrichtung
- 2: Gehäuse
- 3: elektrischer Kontakt
- 4: elektrischer Kontakt
- 5: elektrisch isolierendes Material
- 6: elektrochemischer Energiespeicher
- 7: Schalter
- 8: elektronischer Halbleiterschalter
- 9: Controller
- 10: Antenne
- 11: Schnittstelle
- 12: Diode
- 13: Lithium-Ionen-Akkumulator
- 14: Teil des Gehäuses 2
- 15: Teil des Gehäuses 2
- 16: Innenraum
- 17: Batterie
- 18: elektrischer Kontakt
- 19: elektrischer Kontakt
- 20: Gegenkontakt
- 21: Gegenkontakt
- 22: Versorgungsleitung
- 23: Schaltung
- 24: Smartphone
- 25: Bildschirm
- 26: Benutzermaske
- 27: Geräteidentifikation
- 28: Bedienfeld

## Patentansprüche

1. Vorrichtung (1) mit
- einem Gehäuse (2),
- zwei außen an dem Gehäuse (2) ausgebildeten elektrischen Kontakten (3, 4, 18, 19) und
- einem in dem Gehäuse (2) angeordneten und zwischen die elektrischen Kontakte (3, 4, 18, 19) geschalteten elektrochemischen Energiespeicher (6),
- wobei Form und Abmessungen des Gehäuses (2), Form und Anordnung der elektrischen Kontakte (18, 19) und eine Nennspannung des elektrochemischen Energiespeichers (6) einer Vorgabe für auswechselbare Batterien (17) oder Akkumulatoren entsprechen,
**dadurch gekennzeichnet,**
- **dass** in dem Gehäuse (2) ein elektronischer Schalter (7) mit dem elektrochemischen Energiespeicher (6) zwischen den elektrischen Kontakten(3, 4, 18, 19) in Reihe geschaltet ist und
- **dass** in dem Gehäuse (2) ein Controller (9) angeordnet ist, der eine zur drahtlosen Kommunikation geeignete Schnittstelle (11) aufweist und der dazu ausgebildet ist, den Schalter (7) in Abhängigkeit von über die Schnittstelle (11) empfangenen Signalen zu öffnen und zu schließen.

2. Vorrichtung (1) nach Anspruch 1, **dadurch gekennzeichnet, dass** der elektronische Schalter (7) dazu geeignet ist, eine Spannung zu sperren, die mindestens das 3-Fache, das 4-Fache, das 6-Fache oder das 8-Fache der Nennspannung des elektrochemischen Energiespeichers (6) beträgt.

3. Vorrichtung nach Anspruch 1 oder 2, **dadurch gekennzeichnet, dass** das Gehäuse (2) dauerhaft verschlossen ist.

4. Vorrichtung (1) nach Anspruch 1 oder 2, **dadurch gekennzeichnet, dass** das Gehäuse (2) wiederholt öffen- und schließbar ist und einen Aufnahmeraum sowie innen in dem Aufnahmeraum angeordnete zweite elektrischen Kontakte (3, 4, 18, 19) aufweist, die eine einer anderen Vorgabe für auswechselbare Batterien (17) entsprechende Batterie (17) elektrisch kontaktieren, die als der elektrochemische Energiespeicher (6) in dem Aufnahmeraum angeordnet ist und die keinen Schalter aufweist.

5. Vorrichtung (1) nach einem der vorhergehenden Ansprüche, **dadurch gekennzeichnet, dass** der elektrochemische Energiespeicher (6) wiederaufladbar ist.

6. Vorrichtung (1) nach einem der vorhergehenden Ansprüche, **dadurch gekennzeichnet, dass** der elektrochemische Energiespeicher (6) einen Lithium-Ionen-Akkumulator (13) umfasst.

7. Vorrichtung (1) nach einem der vorhergehenden Ansprüche, **dadurch gekennzeichnet, dass** die Form und die Abmessungen des Gehäuses (2), die Form und die Anordnung der elektrischen Kontakte (3, 4, 18, 19) und die Nennspannung des elektrochemischen Energiespeichers (6)
- einer D-, C-, B-, A-, AA- oder AAA-Zelle oder
- einem Akkumulator für E-Bikes, Notebooks oder Smartphones
entsprechen.

8. Vorrichtung (1) nach einem der vorhergehenden Ansprüche, **dadurch gekennzeichnet, dass** dem Controller (9) eine individuelle Geräte-ID zugeordnet ist, über die Signale individuell an den Controller (9) adressierbar sind.

9. Vorrichtung (1) ach einem der vorhergehenden Ansprüche, **dadurch gekennzeichnet, dass** die Schnittstelle (11) zur drahtlosen Kommunikation über ein WLAN oder WPAN ausgebildet ist.

10. Vorrichtung (1) nach einem der vorhergehenden Ansprüche, **dadurch gekennzeichnet, dass** der Controller (9) mit der Schnittstelle (11) als ZigBee-, Bluetooth- oder Smart Bluetooth-Modul ausgebildet ist.

11. Vorrichtung (1) nach einem der vorhergehenden Ansprüche, **dadurch gekennzeichnet, dass** der Controller (9) elektrisch aus dem elektrochemischen Energiespeicher (6) versorgt wird.

12. Vorrichtung (1) nach einem der vorhergehenden Ansprüche, **dadurch gekennzeichnet, dass** der elektronische Halbleiterschalter (8) ein selbstleitender Halbleiterschalter ist.

13. Vorrichtung (1) nach einem der vorhergehenden Ansprüche, **dadurch gekennzeichnet, dass** an dem Gehäuse (2) ein mechanischer Druckschalter angeordnet ist, dessen Betätigung den elektronischen Halbleiterschalter (8) in eine Grundstellung zurücksetzt.

14. Vorrichtung (1) nach einem der vorhergehenden Ansprüche, **dadurch gekennzeichnet, dass** der elektronische Halbleiterschalter (8) ein selbstsperrender Halbleiterschalter ist, wobei der Controller den Halbleiterschalter (8) nur dann schließt oder geschlossen hält, wenn die über die Schnittstelle (11) empfangenen Signale einen individuellen Freigabecode enthalten.

15. Vorrichtung (1) nach einem der vorhergehenden Ansprüche, **dadurch gekennzeichnet, dass** der elektronische Halbleiterschalter (8) mit einer antiparallel ausgerichteten Diode (12) parallel geschaltet ist.
